# EUROPEAN PATENT APPLICATION

(11) **EP 3 985 493 A1**
(43) Date of publication of application: **20.04.2022**
(21) Application number: 20822796.7
(22) Date of filing: 06.03.2020
(51) Int. Cl.: G06F 3/06

(54) **GROUP MEMBER MANAGEMENT METHOD AND APPARATUS, GROUP MESSAGE PROCESSING METHOD AND APPARATUS, DEVICE, AND STORAGE MEDIUM**

(30) Priority: 12.06.2019 CN 201910505792
(71) Applicant: Beijing Dajia Internet Information Technology Co., Ltd., Haidian District Beijing 100085 (CN)
(72) Inventor: LI, Ming, Beijing 100085 (CN); MA, Yanbing, Beijing 100085 (CN)
(74) Representative: Mathys & Squire
(86) International application number: PCT/CN2020/078297
(87) International publication number: WO 2020/248633

(57) **Abstract**

The present application relates to a group member management method and apparatus, a group message processing method and apparatus, a device, and a storage medium. The group member management method comprises: when a group joining request transmitted by a client is received, determining a target group requested by the client to join, wherein the target group is associated with at least one storage space used for storing the user information of the group members, and all the storage spaces are independent from each other; and storing the user information bound with the client to one of the storage spaces. By associating, by means of a group, multiple storage spaces independent from each other and used for storing the user information of the group members, when the number of group members is excessive, the present invention can store the member information in different storage spaces in a distributed mode, thereby avoiding that the occupation of the same storage resource is excessively large, avoiding a node from overheating, and enabling the scale of a group or a chat room to be capable of reaching a greater magnitude.

## Description

This application claims priority to Chinese Patent Application No. 201910505792.0, filed on June 12, 2019, in the China National Intellectual Property Administration, and entitled "Group Member Management Method and Apparatus, Group Message Processing Method and Apparatus, Device, and Storage Medium", the disclosure of which is herein incorporated by reference in its entirety.

### Field

The present application relates to the field of Internet technology, and particularly to a method and apparatus for managing a group member, a method and apparatus for processing a group message, a device, and a storage medium.

### Background

In instant messaging applications, a chat group or chat room may gather people with the same or similar hobbies or characteristics to communicate together. Any member in the chat group or chat room may receive messages (group messages) sent by other members in this chat group or chat room. When sending a group message to all members in any chat group or chat room, issuance of the group message can be realized only by traversing all the members.

During the process of implementing the above-mentioned related technology, inventors found that the fact that the issuance of the group message can be realized only by traversing all the members is determined by the storage mode of the group member information in the related technology. In this way, when the group size is small, for example, the total quantity of group members is about 10 to 500, the above storage mode may not have much impact on the sending speed of group messages or group notification events. However, when the group size is large, for example, the total quantity of group members is 100,000 or more, the above storage mode easily causes the storage resources occupied by the group member information to be too large, the service node for storing the group member information is accessed by a large number of requests, the problem of node overheating is prone to occur, and the way of sending messages serially may affect the message sending speed and even become a performance bottleneck.

### Summary

The present application provides a method and apparatus for managing a group member, a method and apparatus for processing a group message, a device and a storage medium, to at least solve the problems that the storage mode for all member information of the group causes the excessive occupation of the same storage resource and the node overheating is prone to occur because the corresponding service node is accessed by a large number of requests in the related technology. The technical solutions of the present application are as follows.

According to a first aspect of embodiments of the present application, a method for managing a group member is provided, the method including: determining a target group that a client requests to join when receiving a group joining request sent by the client, where the target group is associated with at least one storage space for storing user information of group members, and each storage space is independent from other storage spaces; storing user information bound to the client in a storage space associated with the target group.

According to a second aspect of embodiments of the present application, an apparatus for managing a group member is provided, the apparatus including: a first determining unit configured to determine a target group that a client requests to join when receiving a group joining request sent by the client, where the target group is associated with at least one storage space for storing user information of group members, and each storage space is independent from other storage spaces; a first execution unit configured to store user information bound to the client in a storage space associated with the target group.

According to a third aspect of embodiments of the present application, a method for processing a group message is provided, the method including: determining a target group to which a group message requests to be sent when receiving a sending request of the group message; where the target group is associated with at least one storage space for storing user information of group members, and each storage space is independent from other storage spaces; obtaining user information stored in different storage spaces associated with the target group in parallel, and sending the group message to clients bound to the obtained user information.

According to a fourth aspect of embodiments of the present application, an apparatus for processing a group message is provided, the apparatus including: a second determining unit configured to determine a target group to which a group message requests to be sent when receiving a sending request of the group message; where the target group is associated with at least one storage space for storing user information of group members, and each storage space is independent from other storage spaces; a second execution unit configured to obtain user information stored in different storage spaces associated with the target group in parallel, and send the group message to clients bound to the obtained user information.

According to a fifth aspect of embodiments of the present application, an electronic device is provided, the electronic device including: a processor; a memory configured to store a computer program executable by the processor; where the processor is configured to: determine a target group that a client requests to join when receiving a group joining request sent by the client, where the target group is associated with at least one storage space for storing user information of group members, and each storage space is independent from other storage spaces; store user information bound to the client in a storage space associated with the target group.

According to a sixth aspect of embodiments of the present application, an electronic device is provided, the electronic device including: a processor; a memory configured to store a computer program executable by the processor; where the processor is configured to: determine a target group to which a group message requests to be sent when receiving a sending request of the group message; where the target group is associated with at least one storage space for storing user information of group members, and each storage space is independent from other storage spaces; obtain user information stored in different storage spaces associated with the target group in parallel, and send the group message to clients bound to the obtained user information.

According to a seventh aspect of embodiments of the present application, a computer-readable storage medium is provided, where a computer program in the storage medium, when executed by a processor, enables the processor to perform steps of the method for managing a group member and/or steps of the method for processing a group message.

According to an eighth aspect of embodiments of the present application, a computer program product is provided; and the computer program product includes executable program codes. When the program codes are loaded into a processor and executed by the processor, the processor performs the steps of the method for managing a group member and/or the steps of the method for processing a group message.

The technical solutions provided by embodiments of the present application at least bring the following beneficial effects.

By associating one group with a plurality of independent storage spaces for storing the user information of group members, the member information can be dispersedly stored in different storage spaces when there are too many group members, thereby avoiding the excessive occupation of the same storage resource and avoiding the node overheating, so that the scale of the group or chat room can reach a larger order of magnitude.

It should be understood that the above general description and the following detailed description are only exemplary and illustrative, and cannot limit the present application.

### Brief Description of the Drawings

Accompanying drawings here, which are incorporated in and constitute a part of this specification, illustrate embodiments consistent with the present application and, together with the description, serve to explain principles of the present application and do not constitute an inappropriate limitation on the present application.
Fig. 1 is a schematic diagram of an application scenario according to an embodiment of the present application;
Fig. 2 is a flowchart of a method for managing a group member according to an embodiment of the present application;
Fig. 3 is a flowchart of a method for processing a group message according to an embodiment of the present application;
Fig. 4 is a block diagram of an apparatus for managing a group member according to an embodiment of the present application;
Fig. 5 is a block diagram of an apparatus for processing a group message according to an embodiment of the present application;
Fig. 6 is a block diagram of an electronic device according to an embodiment of the present application.

### Detailed Description of Embodiments

In order to enable those ordinary skilled in the art to better understand the technical solutions of the present application, the technical solutions in embodiments of the present application will be described clearly and completely with reference to the accompanying drawings.

It should be noted that the terms such as "first", "second" and the like in the description and claims of the present application and the above drawings are used to distinguish the similar objects, but not necessarily to describe a particular order or sequence. It should be understood that the data used in this way is interchangeable under appropriate circumstances, so that embodiments of the present application described herein can be implemented in an order other than those illustrated or described herein. The implementations described in the following embodiments do not represent all the implementations consistent with the present application. On the contrary, they are only the examples of the devices and methods which are detailed in the attached claims and consistent with some aspects of the present application.

In order to at least solve the problems that the storage mode of all member information of the group causes the excessive occupation of the same storage resource and the node overheating is prone to occur because the corresponding service node is accessed by a large number of requests in the related technology, an embodiment of the present application proposes a new method for managing a group member. By associating one group with a plurality of independent storage spaces for storing the user information of group members, the member information can be dispersedly stored in different storage spaces when there are too many group members, thereby avoiding the excessive occupation of the same storage resource and avoiding the node overheating, so that the scale of the group or chat room can reach a larger order of magnitude.

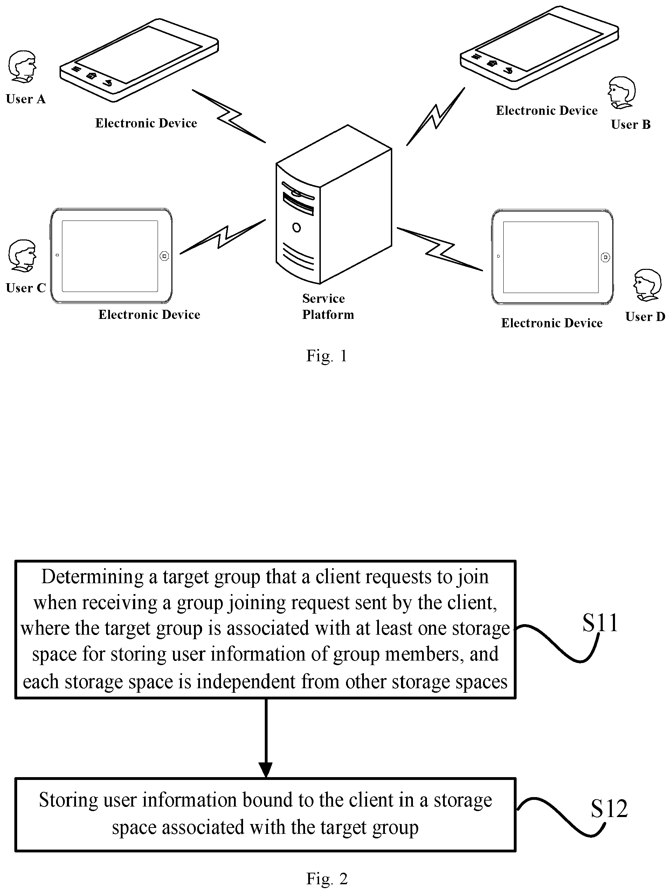

An application scenario provided by an embodiment of the present application is shown in Figure 1. Any user in the figure may use an instant communication application installed in his electronic device to request the service platform to enter an existing group or chat room, where the service platform may be provided by the provider of the instant communication application, and the functions of the service platform may be realized by one server or more than one server sharing different responsibilities in cooperation with each other; and the electronic device may be any one of a mobile phone, a tablet computer, a personal assistant, a smart watch, or a computer.

Fig. 2 is a flowchart of a method for managing a group member according to an embodiment of the present application. This method may be applied in a service platform that provides the group chat or chat room function, and includes the following steps.

Step S11: determining a target group that a client requests to join when receiving a group joining request sent by the client, where the target group is associated with at least one storage space for storing user information of group members, and each storage space is independent from other storage spaces.

In a specific implementation, the group joining request may be sent by a user who needs to join a certain group or chat room (hereinafter referred to as the target group) to the service platform through a client with the group chat or chat room function, or may be triggered by the operation of adding a group member that a member in the target group performs. Here, the user may send the group joining request to the service platform through any technical method for requesting to join group that has been disclosed in the related technology, and the member in the target group may also trigger the group joining request through any technical method for adding a group member that has been disclosed in the related technology, which are not limited in embodiments of the present application.

In an example, in order to improve the efficiency of the service platform to manage the information of a new member according to the group joining request, and to reduce the operation of the user requesting to join the group and the number of communications between the service platform and the client, the group joining request may carry user information bound to the client that sends the group joining request and group identifier (ID) information of the target group that the client requests to join. The group ID information is used to characterize the group's unique mark, such as group number or chat room number.

It should be noted that the mutual independence of storage spaces means that all storage spaces associated with a group are physically isolated from each other. It can be understood that a logical space may be allocated to each group. Based on this, for a group associated with only one storage space, it can be considered that its logical space consists of one physical space; but for a group associated with a plurality of (two or more) storage spaces, it can be considered that its logical space consists of a plurality of physical spaces isolated from each other.

Step S12: storing user information bound to the client in a storage space associated with the target group.

In a specific implementation, after receiving the group joining request sent by the client, the service platform may determine the target group that the client requests to join according to the group ID information of the target group carried in the group joining request, and then store the user information bound to the client in one storage space associated with the target group, thereby realizing the management of the new member.

Since there may be only one storage space associated with the target group or the storage spaces associated with the target group may have stored the user information of many members, the existing storage space(s) may be overloaded if the storage continues. Therefore, taking into account the reasonable allocation of the storage spaces of the group while solving the above technical problems, it is possible to determine whether to create a new storage space for the target group according to a total quantity of members of the target group.

Based on this, in an embodiment, after determining the target group that the client requests to join, the method may further include: creating a new storage space when a total quantity of members of the target group is greater than or equal to a preset value. It can be understood that it is firstly determined whether the total quantity of members of the target group is greater than or equal to the preset value after determining the target group that the client requests to join; if the total quantity of members of the target group is greater than or equal to the preset value, a new storage space is created and then the user information bound to the client is stored; otherwise, when it is determined that the total quantity of members of the target group is less than the preset value, the user information bound to the client may be directly stored.

In this way, when the total quantity of members of the group is greater than or equal to the preset value, the user information is stored after a new storage space is created; when the total quantity of members of the group is less than the preset value, no new storage space is created and the user information is directly stored, improving the flexibility and rationality of storage space creation, ensuring the balance between the number of storage spaces and the number of members, and avoiding the problem of overloaded storage spaces due to few storage spaces associated with the group in the case of too many members and the problem of low message sending efficiency caused by an increase in the number of resource accesses due to too many storage spaces created for the group in the case of few members.

In an embodiment, in order to obtain the total quantity of members of the target group, each storage space may also store the quantity of group members (referred to as the quantity of sub-members below) corresponding to the stored user information in addition to the user information of the group members.

Based on this, the process of determining whether to create the new storage space according to the total quantity of members of the target group may include: obtaining a quantity of sub-members stored in each storage space associated with the target group; determining a sum of all quantities of sub-members to obtain the total quantity of members of the target group; determining whether the total quantity of members of the target group is greater than or equal to the preset value; if the total quantity of members of the target group is greater than or equal to the preset value, creating a new storage space for the target group; if the total quantity of members of the target group is less than the preset value, creating no new storage space for the target group. Alternatively, the process of determining whether to create the new storage space according to the total quantity of members of the target group may include: obtaining the quantity of sub-members stored in each storage space associated with the target group; determining whether the quantity of sub-members in each storage space is greater than or equal to a specified value; if the quantity of sub-members in each storage space is greater than or equal to the specified value, creating a new storage space for the target group; if the quantity of sub-members in each storage space is less than the specified value, creating no new storage space for the target group.

In the above method of determining whether the total quantity of members of the target group is greater than or equal to the preset value through the quantity of sub-members stored in each storage space associated with the target group, it is necessary to access each storage space in order to obtain the quantity of sub-members stored in each storage space, and it is further necessary to calculate the sum of all the quantities of sub-members or compare the quantities of sub-members with a specified value one by one after all the quantities of sub-members are obtained, which will affect the determination efficiency to a certain extent.

In order to solve this technical problem, in another embodiment, the method may further include: storing a total quantity of storage spaces associated with the target group and a total quantity of members of the target group in a first storage space created for the target group. Based on this, when the total quantity of members of the target group needs to be obtained, the total quantity of members stored in the first storage space can be directly obtained. Correspondingly, the process of determining whether to create the new storage space according to the total quantity of members of the target group may include: obtaining the total quantity of members stored in the first storage space associated with the target group; determining whether the total quantity of members is greater than or equal to a preset value; if the total quantity of members is greater than or equal to the preset value, creating a new storage space for the target group; if the total quantity of members is less than the preset value, creating no new storage space for the target group.

In this way, the total quantity of members of the target group is directly stored in the first storage space, so that the total quantity of members can be obtained directly from the first storage space to perform the determination operation when determining whether the total quantity of members of the target group is greater than or equal to the preset value. There is no need to access other storage spaces than the first storage space and no need to perform the operation of determining the sum of the quantities of sub-members or comparing the quantities of sub-members with the specified value one by one, thereby reducing the number of visits to the storage spaces, simplifying the operation of obtaining the total quantity of members, and improving the determination efficiency.

In the foregoing embodiment, the preset value and the specified value may be obtained based on experience or experiment. However, as the storage spaces associated with the target group increase, the quantity of group members that the target group can accommodate may also increase. Therefore, the use of a constant preset value as the criterion for determining whether to create a new storage space may affect the accuracy of the determination result.

In order to solve this technical problem, in another embodiment, the preset value is calculated based on the total quantity of storage spaces associated with the target group and the average capacity of storage spaces. For example, the preset value may be the product of the total quantity of storage spaces and the average capacity of storage spaces. Here, the average capacity of storage spaces is used to characterize the average value of the quantities of user information that all storage spaces can store, and may be preset based on experience or experiment. Based on this, the specified value may be equal to the average capacity of storage spaces.

After determining whether to create a new storage space through any above embodiment, the user information bound to the client may be stored in a storage space by way of random storage regardless of the determination result, which may be understood as: when the total quantity of members of the target group is greater than or equal to the preset value, a new storage space is created, and the user information bound to the client is randomly stored in a storage space based on the storage spaces currently associated with the target group; when the total quantity of members of the target group is less than the preset value, the user information bound to the client is directly stored in a storage space randomly. Here, for the new storage space, the user information initially stored therein is much less than the user information stored in other storage spaces, which may cause the uneven load in the storage spaces associated with the target group. But for a temporary group, as the members join and leave subsequently, the quantity of members leaving from the storage space that stores more user information may generally be greater than the quantity of members leaving from the storage space that stores less user information, so the load of each storage space may gradually tend to be balanced. Therefore, when the target group is a temporary group, there is no need to worry about the uneven load of its associated storage spaces when being newly created.

On the one hand, for a temporary group, the problem of uneven load of its associated storage spaces when being newly created may be solved finally as the group members join and leave. However, the user information of newly added member may be stored in the storage space with more load than that of other storage spaces in the process of random storage, so the process in which the load of the storage spaces associated with the target group gradually tends to be balanced through random storage may take a long time. On the other hand, for a permanent group, since the members are generally relatively fixed, the case that a large number of members leave and join as in a temporary group may generally not occur. Therefore, when the target group is a permanent group, if the storage of the user information of the new member of the target group is realized through random storage, it is difficult to achieve a balance between the newly created storage space and the original storage spaces of the target group.

Therefore, when there is a need to solve the above technical problem caused by randomly storing the user information, the user information of the newly added member is not stored in the way of random storage but the user information of the newly added member may be stored by specifying a storage space in another embodiment, where the amount of user information currently stored in the specified storage space is less than the amount of user information stored in other storage spaces. In this way, in order to know the storage situation of the amount of user information in each storage space associated with the target group, each storage space may store the quantity of group members (which is called the quantity of sub-members for short, and can be understood as "the amount of user information" described above) corresponding to the stored user information in addition to the user information of the group members. Based on this, after determining whether to create a new storage space, a specified storage space may be determined according to the quantity of sub-members stored in each storage space, and then the user information bound to the client is stored in the specified storage space. This can be understood as: on the one hand, when the total quantity of members of the target group is greater than or equal to the preset value, a new storage space may be created. Since the new storage space has just been created, the quantity of sub-members stored therein is less than those in other storage spaces. In this case, instead of obtaining the quantity of sub-members stored in each storage space, the user information bound to the client may be directly stored in the new storage space. On the other hand, when the total quantity of members of the target group is less than the preset value, a storage space with the least quantity of sub-members may be determined according to the quantity of sub-members stored in each storage space, and the user information bound to the client is stored in the storage space with the least quantity of sub-members.

Furthermore, if there are a plurality of storage spaces with the least quantity of sub-members, any one of the storage spaces with the least quantity of sub-members may be selected to store the user information bound to the client.

In another embodiment, the present application further provides another technical solution to solve the above technical problem caused by randomly storing the user information. Each storage space may store the quantity of group members (that is, the quantity of sub-members described above) corresponding to the stored user information in addition to the user information of the group members; the method may include: performing the following steps at a preset frequency: obtaining the quantity of sub-members stored in each storage space associated with the target group; and determining whether to adjust the user information stored in each storage space according to all the quantities of sub-members, where the preset frequency may be preset based on experience or experiment and may be understood as: performing the above steps at intervals of time to determine whether to adjust the user information stored in each storage space.

In one example, the step of determining whether to adjust the user information stored in each storage space according to all the quantities of sub-members may include: determining the average value of all the quantities of sub-members; and for a storage space with the quantity of stored sub-members greater than the average value, transferring a part of the stored user information to a storage space with the quantity of stored sub-members less than the average value. In this way, the user information in the storage space storing more user information may be transferred to other storage spaces storing less user information for storage.

In a specific implementation, if there is no storage space with the quantity of sub-members less than the average value, the user information stored in each storage space may be adjusted so that the amount of user information stored in each adjusted storage space is close to the average value.

In another example, the step of determining whether to adjust the user information stored in each storage space according to all the quantities of sub-members may include: for a storage space with the quantity of stored sub-members greater than a specified value, transferring a part of the stored user information to a storage space with the quantity of sub-members less than the specified value.

In yet another example, the step of determining whether to adjust the user information stored in each storage space according to all the quantities of sub-members may include: determining the difference between two quantities of sub-members; and for two storage spaces with the largest difference between two quantities of sub-members, transferring a part of the user information stored in the storage space with greater quantity of sub-members to the storage space with less quantity of sub-members.

It should be noted that the above solutions of determining whether to adjust the user information stored in each storage space according to all the quantities of sub-members are only examples provided in the present application and should not be construed as a limitation on the present application. Furthermore, the amount of user information transferred may be controlled based on experiment or experience, which is not limited in embodiments of the present application.

In a specific implementation, after adjusting the user information stored in each storage space, in order to ensure the correctness of the quantity of sub-members stored in each storage space, the quantity of sub-members stored in the adjusted storage space may also be updated.

It should be noted that the step of storing the total quantity of storage spaces associated with the target group and the total quantity of members of the target group in the first storage space created for the target group may be performed when the target group is created. Subsequently, if the total quantity of storage spaces associated with the target group or the total quantity of members changes, the total quantity of storage spaces or the total quantity of members stored in the first storage space may be updated.

Here, the total quantity of members of the target group generally changes when members join or leave the target group. In order to update the total quantity of members of the target group in time, in one embodiment, based on the embodiment in which the total quantity of storage spaces associated with the target group and the total quantity of members are stored in the first storage space, after storing the user information bound to the client in the storage space, the method may further include: updating the total quantity of members stored in the first storage space; for example, assuming that there is only one member to join, it is possible to add 1 to the original total quantity of members to obtain the updated total quantity of members. In another embodiment, based on the embodiment in which each storage space stores the quantity of sub-members, after storing the user information bound to the client in the storage space, the method may further include: updating the quantity of sub-members stored in the storage space storing the user information bound to the client. In yet another embodiment, in the case that each storage space associated with the target group stores the quantity of sub-members and the first storage space created for the target group stores the total quantity of members, after storing the user information bound to the client in the storage space, the method may further include: updating the total quantity of members stored in the first storage space and the quantity of sub-members stored in the storage space storing the user information bound to the client.

Therefore, when a new member joins the target group, the total quantity of members and/or the quantity of sub-members may be updated through the above-mentioned records. Similarly, when a member leaves from the target group, the total quantity of members and/or the quantity of sub-members may also be updated according to the similar update principle. For example, in one embodiment, the method may further include: when receiving a withdrawal request to leave from the target group, determining the user information bound to the client that issued the withdrawal request (hereinafter called the withdrawal user information for short); determining a target storage space that stores the withdrawal user information, and deleting the withdrawal user information stored in the target storage space; and updating the total quantity of members stored in the first storage space and/or the quantity of sub-members stored in the target storage space after deleting the withdrawal user information. For example, assuming that two members are currently leaving, it is possible to subtract 2 from the original total quantity of members to obtain the updated total quantity of members, where the withdrawal request may carry the withdrawal user information and the group ID of the group that is requested to leave.

Furthermore, the total quantity of storage spaces generally changes when the storage spaces associated with the target group increase or decrease. In order to avoid the jitter caused by the increasing or decreasing quantity of storage spaces, in an embodiment of the present application, the quantity of group-associated storage spaces are only allowed to increase but not allowed to decrease. It can be understood that: subsequently, even if the total quantity of members of the target group is reduced to use only one storage space, the storage spaces that have been created for the target group are also retained, and any storage space associated with the target group is not deleted. Therefore, in an embodiment of the present application, the total quantity of storage spaces may only change when the storage spaces associated with the target group increase. Based on this, in one embodiment, in order to update the total quantity of storage spaces in time, after a new storage space is created, the method may further include: updating the total quantity of storage spaces stored in the first storage space. Thus, after the total quantity of storage spaces is updated, if a group joining request sent by a client is received, the updated total quantity of storage spaces may be used to recalculate the preset value, to ensure the timely update of the preset value and the accuracy of the determination result.

In one embodiment, in order to improve the intuition of the user information stored in each storage space and reduce the difficulty of searching for the user information, the user information stored in each storage space may be stored in the form of a member list.

Based on the previous embodiment, in another embodiment, in order to improve the efficiency of reading the total quantity of members from the first storage space, the total quantity of members may be stored at the head of the member list.

Thus, by creating at least one independent storage space for the target group, a group message may be sent to the clients bound to the group members of the target group in a distributed manner when a group message sending request is received. It can be understood that, in one embodiment, the method may further include: obtaining the user information stored in different storage spaces in parallel to send a group message to clients bound to the obtained user information when sending the group message to clients bound to group members of the target group. Based on this, the service platform may be a distributed system to realize the function of sending a group message in a distributed manner, where the group message may be caused by the attribute change of the target group or a subscription message, or may be caused by any member through the chat function provided by the target group, but it is not limited thereto.

The process of sending a group message to clients bound to group members of the target group will be illustrated below.

It is assumed that a member (hereinafter referred to as member A) of the target group sends a group message through the chat function of the target group at a certain moment. After the member A sends the group message, the client bound to the member A may immediately display the group message, and the client bound to the member A may send a group message sending request carrying the user information of the member A, the group ID of the target group and the group message to the service platform.

After receiving the group message sending request, the service platform may determine the target group according to the group message sending request. After the target group is determined, the total quantity of storage spaces stored in the first storage space may be firstly obtained. If the total quantity of storage spaces is 1, it means that the target group is associated with only one storage space, i.e., the first storage space; when sending a group message, the user information stored in the first storage space is traversed, and the group message is sequentially sent to the clients bound to the user information stored in the first storage space. If the total quantity of storage spaces is greater than 1, it means that the target group is associated with a plurality of storage spaces; in this case, the space information of all storage spaces associated with the target group may be added to a message queue before sending the group message, where the space information is used to characterize the unique marks of the storage spaces and may include the IDs of the storage spaces and the group ID of the target group. Then, the data of the message queue may be consumed by the distributed message sending module in the service platform when sending the group message. It can be understood that: the distributed message sending module may obtain the space information with the same group ID as the group ID of the target group from the message queue according to the group ID of the target group, and then obtain the user information stored in the corresponding storage spaces in parallel according to the obtained space information to send the group message to the clients bound to the obtained user information. In this way, the group message is sent to clients bound to the members of different storage spaces of the target group in the parallel sending manner, which can take advantage of distributed transmission to improve the message sending performance of the large-scale group.

As can be seen from the above, the improvement of the storage mode of the group member information can bring about the improvement of the group message sending mode. Therefore, from the perspective of group message sending, an embodiment of the present application further provides a method for processing a group message, to at least solve the problems that the storage mode of all member information of the group causes the excessive occupation of the same storage resource and the node overheating is prone to occur because the corresponding service node is accessed by a large number of requests in the related technology, and to improve the message sending performance of the large-scale group or chat room.

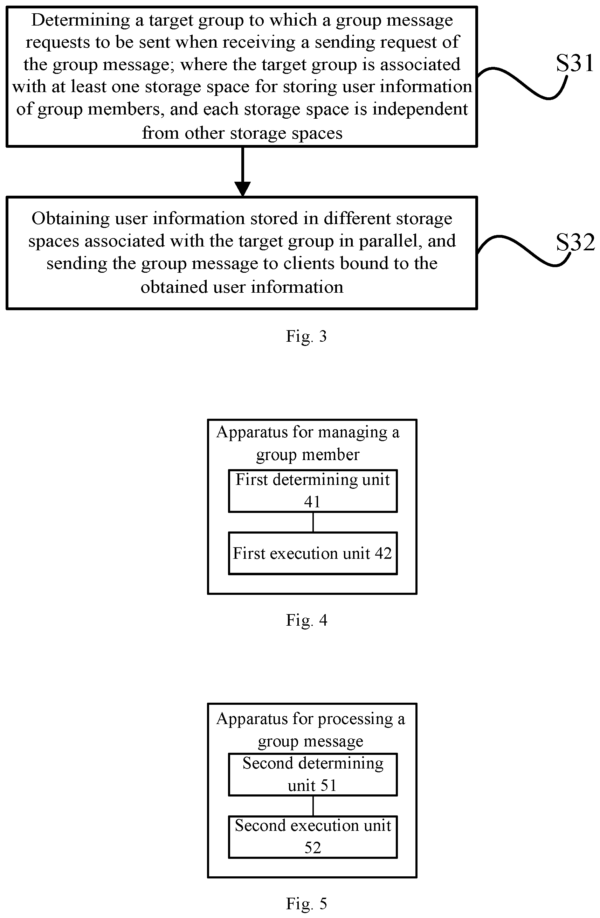

As shown in Fig. 3, Fig. 3 is a flowchart of a method for processing a group message according to an embodiment, and the method includes the following steps.

Step S31: determining a target group to which a group message requests to be sent when receiving a sending request of the group message; where the target group is associated with at least one storage space for storing user information of group members, and each storage space is independent from other storage spaces.

Step S32: obtaining user information stored in different storage spaces associated with the target group in parallel, and sending the group message to clients bound to the obtained user information.

Here, the understanding of the step S31 and step S32 can refer to the above-mentioned example for explaining the process of sending the group message to the clients bound to the group members of the target group and refer to the related records in the method for managing a group member, and will not be repeated here.

In an embodiment of the present application, one group may be associated with a plurality of independent storage spaces for storing the user information of group members, and the member information is dispersedly stored in different storage spaces when there are too many group members, thereby avoiding the excessive occupation of the same storage resource and avoiding the node overheating, so that the scale of the group or chat room can reach a larger order of magnitude. In the group message sending process, the user information stored in the different storage spaces associated with the group is obtained in parallel, and the group message is sent to the clients bound to the obtained user information, so that the group message is sent in parallel to the clients bound to the user information stored in different storage spaces, greatly improving the message sending performance in a large-scale group or chat room.

Furthermore, in other embodiments, the storage technology of the user information of the group members in the method for managing a group member can be applied to the method for processing a group message, so that the method for processing a group message also has the beneficial technical effects produced by the method for managing a group member.

Corresponding to the foregoing method for managing a group member, an embodiment of the present application further provides an apparatus for managing a group member. Fig. 4 is a block diagram of an apparatus for managing a group member according to an embodiment. This apparatus includes a first determining unit 41 and a first execution unit 42.

The first determining unit 41 is configured to determine a target group that a client requests to join when receiving a group joining request sent by the client, where the target group is associated with at least one storage space for storing user information of group members, and each storage space is independent from other storage spaces.

The first execution unit 42 is configured to store user information bound to the client in one a storage space associated with the target group.

In an embodiment, the apparatus may further include a creation unit.

The creation unit is configured to create a new storage space when determining that a total quantity of members of the target group is greater than or equal to a preset value after the first determining unit 41 determines the target group that the client requests to join.

In an embodiment, the apparatus may further include a third execution unit.

The third execution unit is configured to store a total quantity of storage spaces associated with the target group and a total quantity of members of the target group in a first storage space created for the target group.

In an embodiment, the apparatus may further include a first update unit.

The first update unit is configured to update the total quantity of members stored in the first storage space and/or update a quantity of members in the storage space storing the user information bound to the client after the first execution unit 42 stores the user information bound to the client in the storage space.

In an embodiment, the apparatus may further include a second update unit.

The second update unit is configured to update a total quantity of storage spaces stored in a first storage space after the first execution unit 42 creates the new storage space, where the first storage space is used to store a total quantity of storage spaces associated with the target group and a total quantity of members of the target group.

In an embodiment, the apparatus may further include a group message sending unit.

The group message sending unit is configured to send a group message to clients bound to user information by obtaining the user information stored in different storage spaces in parallel when sending the group message to clients bound to group members of the target group.

Corresponding to the foregoing method for processing a group message, an embodiment of the present application further provides an apparatus for processing a group message. Fig. 5 is a block diagram of an apparatus for processing a group message according to an embodiment. This apparatus includes a second determining unit 51 and a second execution unit 52.

The second determining unit 51 is configured to determine a target group to which a group message requests to be sent when receiving a sending request of the group message; where the target group is associated with at least one storage space for storing user information of group members, and each storage space is independent from other storage spaces.

The second execution unit 52 is configured to obtain user information stored in different storage spaces associated with the target group in parallel, and send the group message to clients bound to the obtained user information.

Regarding the apparatus in the above embodiment, the specific manner in which each unit performs the operations has been described in detail in an embodiment related to the method, and will not be illustrated in detail here. Moreover, the apparatus embodiments described above are merely illustrative, where the units described as separate components may or may not be physically separated, and the components displayed as units may or may not be physical units.

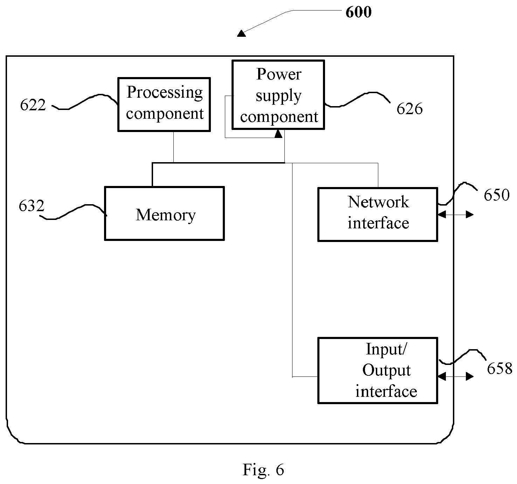

Corresponding to the foregoing method embodiment, an embodiment of the present application further provides an electronic device. In an embodiment, the electronic device may be a service platform. Fig. 6 is a block diagram of an electronic device according to an embodiment. The electronic device 600 includes a processing component 622 and a memory 632.

Here, the memory 632 is configured to store a computer program executable by the processing component 622; and the processing component 622 is configured to implement the method for managing a group member in any one of the above embodiments and/or the method for processing a group message in any one of the above embodiments when executing the computer program.

In an embodiment, the processing component 622 may include one or more processors.

In an embodiment, the memory 632 may store memory resources (for example, several application programs) other than the aforementioned computer program. The application program stored in the memory 632 may include one or more modules corresponding to a set of instructions.

In an embodiment, the electronic device 600 may further include a power supply component 626. The power supply component 626 may be configured to perform the power management operation of the electronic device 600.

In an embodiment, the electronic device 600 may further include a wired or wireless network interface 650 and an Input/Output (I/O) interface 658. The network interface 650 is configured to connect the electronic device 600 to a network.

Furthermore, the electronic device 600 may operate the operating system stored in the memory 632, for example, Android, IOS, Windows ServerTM, Mac OS XTM, UnixTM, LinuxTM, FreeBSDTM or the like.

Corresponding to the foregoing method embodiments, an embodiment further provides a computer-readable storage medium including a computer program, for example, the memory 632 including the computer program. The above computer program is executable by the processing component 622 of the electronic device 600 to complete the method for managing a group member in any one of the above embodiments and/or the method for processing a group message in any one of the above embodiments.

The computer-readable storage medium may include: permanent or non-permanent removable or non-removable media. The information storage function of the computer-readable storage medium may be implemented by any achievable method or technology. The information may be computer readable instructions, data structures, models of programs, or other data.

Furthermore, the computer-readable storage medium includes but is not limited to: phase change memory (PRAM), Static Random Access Memory (SRAM), Dynamic Random Access Memory (DRAM), other types of Random Access Memory (RAM), Read-Only Memory (ROM), Electrically Erasable Programmable Read-Only Memory (EEPROM), flash memory or memory of other memory technology, Compact Disc Read-Only Memory (CD-ROM), Digital Versatile Disc (DVD) or other optical memory, cassette tape, magnetic tape disk storage or other magnetic storage device or other non-transmission medium that can be used to store the information that can be accessed by computing devices.

In an embodiment, an embodiment of the present application further provides a computer program product for performing the steps of the method for managing a group member in any one of the above embodiments and/or the method for processing a group message in any one of the above embodiments. The computer program product includes executable program codes. After the processing component 622 of the electronic device 600 loads and executes the program codes, the method for managing a group member in any one of the above embodiments and/or the method for processing a group message in any one of the above embodiments may be performed to implement the corresponding group member management function and/or group message processing function.

Those skilled in the art easily think of other embodiments of the present application after considering the specification and practicing the invention disclosed herein. The present application is intended to cover any variations, uses, or adaptations of the present application, which follow the general principles of the present application and includes common sense or conventional technical means known in the art not disclosed in the present application. The specification and embodiments are illustrative only, and the true scope and spirit of the present application are indicated by the following claims.

It should be understood that the present application is not limited to the precise structure already described above and shown in the accompanying drawings, and various modifications and changes may be made without departing from the scope of the present application. The scope of the present application is limited only by the appended claims.

## Claims

1. A method for managing a group member, comprising:
determining a target group that a client requests to join when receiving a group joining request sent by the client, wherein the target group is associated with at least one storage space for storing user information of group members, and each storage space is independent from other storage spaces;
storing user information bound to the client in a storage space associated with the target group.

2. The method according to claim 1, wherein after determining the target group that the client requests to join, the method further comprises:
creating a new storage space when a total quantity of members of the target group is greater than or equal to a preset value.

3. The method according to claim 1, further comprising:
storing a total quantity of storage spaces associated with the target group and a total quantity of members of the target group in a first storage space created for the target group.

4. The method according to claim 3, wherein after storing the user information bound to the client in the storage space, the method further comprises:
updating the total quantity of members stored in the first storage space; and/or
updating a quantity of members in the storage space storing the user information bound to the client.

5. The method according to claim 2, further comprising:
storing a total quantity of storage spaces associated with the target group and a total quantity of members of the target group in a first storage space created for the target group;
after creating the new storage space, the method further comprises:
updating the total quantity of storage spaces stored in the first storage space.

6. The method according to claim 1, further comprising:
sending a group message to clients bound to user information by obtaining the user information stored in different storage spaces in parallel when sending the group message to clients bound to group members of the target group.

7. A method for processing a group message, comprising:
determining a target group to which a group message requests to be sent when receiving a sending request of the group message; wherein the target group is associated with at least one storage space for storing user information of group members, each storage space is independent from other storage spaces;
obtaining user information stored in different storage spaces associated with the target group in parallel, and sending the group message to clients bound to the obtained user information.

8. An apparatus for managing a group member, comprising:
a first determining unit configured to determine a target group that a client requests to join when receiving a group joining request sent by the client, wherein the target group is associated with at least one storage space for storing user information of group members, and each storage space is independent from other storage spaces;
a first execution unit configured to store user information bound to the client in a storage space associated with the target group.

9. The apparatus according to claim 8, further comprising a creation unit:
the creation unit is configured to create a new storage space when determining that a total quantity of members of the target group is greater than or equal to a preset value after the first determining unit determines the target group that the client requests to join.

10. The apparatus according to claim 8, further comprising a third execution unit:
the third execution unit is configured to store a total quantity of storage spaces associated with the target group and a total quantity of members of the target group in a first storage space created for the target group.

11. The apparatus according to claim 10, further comprising a first update unit:
the first update unit is configured to update the total quantity of members stored in the first storage space and/or update a quantity of members in the storage space storing the user information bound to the client after the first execution unit stores the user information bound to the client in the storage space.

12. The apparatus according to claim 9, further comprising a second update unit:
the second update unit is configured to update a total quantity of storage spaces stored in a first storage space after the first execution unit creates the new storage space, wherein the first storage space is used to store a total quantity of storage spaces associated with the target group and a total quantity of members of the target group.

13. The apparatus according to claim 8, further comprising a group message sending unit:
the group message sending unit is configured to send a group message to clients bound to user information by obtaining the user information stored in different storage spaces in parallel when sending the group message to clients bound to group members of the target group.

14. An apparatus for processing a group message, comprising:
a second determining unit configured to determine a target group to which a group message requests to be sent when receiving a sending request of the group message; wherein the target group is associated with at least one storage space for storing user information of group members, and each storage space is independent from other storage spaces;
a second execution unit configured to obtain user information stored in different storage spaces associated with the target group in parallel, and send the group message to clients bound to the obtained user information.

15. An electronic device, comprising:
a processor;
a memory configured to store a computer program executable by the processor;
wherein the processor is configured to:
determine a target group that a client requests to join when receiving a group joining request sent by the client, wherein the target group is associated with at least one storage space for storing user information of group members, and each storage space is independent from other storage spaces;
store user information bound to the client in a storage space associated with the target group.

16. The electronic device according to claim 15, wherein the processor is further configured to:
create a new storage space when determining that a total quantity of members of the target group is greater than or equal to a preset value after determining the target group that the client requests to join.

17. The electronic device according to claim 15, wherein the processor is further configured to:
store a total quantity of storage spaces associated with the target group and a total quantity of members of the target group in a first storage space created for the target group.

18. The electronic device according to claim 17, wherein the processor is further configured to:
update the total quantity of members stored in the first storage space after storing the user information bound to the client in the storage space; and/or
update a quantity of members in the storage space storing the user information bound to the client.

19. The electronic device according to claim 16, wherein the processor is further configured to:
store a total quantity of storage spaces associated with the target group and a total quantity of members of the target group in a first storage space created for the target group;
update the total quantity of storage spaces stored in the first storage space after creating the new storage space.

20. The electronic device according to claim 15, wherein the processor is further configured to:
send a group message to clients bound to user information by obtaining the user information stored in different storage spaces in parallel when sending the group message to clients bound to group members of the target group.

21. An electronic device, comprising:
a processor;
a memory configured to store a computer program executable by the processor;
wherein the processor is configured to:
determine a target group to which a group message requests to be sent when receiving a sending request of the group message; wherein the target group is associated with at least one storage space for storing user information of group members, and each storage space is independent from other storage spaces;
obtain user information stored in different storage spaces associated with the target group in parallel, and send the group message to clients bound to the obtained user information.

22. A computer-readable storage medium, wherein a computer program in the storage medium, when executed by a processor, enables the processor to perform steps of the method for managing a group member according to any one of claims 1 to 6 and/or steps of the method for processing a group message according to claim 7.
